# EUROPEAN PATENT APPLICATION

(11) **EP 4 745 088 A1**
(43) Date of publication of application: **20.05.2026**
(21) Application number: 24863140.0
(22) Date of filing: 02.09.2024
(51) Int. Cl.: C01G 53/00, C01B 25/45, H01M 4/36, H01M 4/505, H01M 4/525, H01M 10/0562, H01M 4/131, H01M 10/052, H01M 4/02

(54) **METHOD FOR MANUFACTURING SURFACE-MODIFIED ELECTRODE ACTIVE MATERIAL AND ELECTRODE AND LITHIUM SECONDARY BATTERY MANUFACTURED THEREBY**

(30) Priority: 06.09.2023 KR 20230118577
(71) Applicant: LG Energy Solution, Ltd., Seoul 07335 (KR)
(72) Inventor: LEE, Sangryeo, Daejeon 34122 (KR); RYU, Jihoon, Daejeon 34122 (KR); LIM, Taeseob, Daejeon 34122 (KR); BYUN, Seoungwoo, Daejeon 34122 (KR); JANG, Eunji, Daejeon 34122 (KR); KIM, Dong Kyu, Daejeon 34122 (KR)
(74) Representative: BCKIP Part mbB
(86) International application number: PCT/KR2024/013127
(87) International publication number: WO 2025/053559

(57) **Abstract**

The present disclosure relates to a method for manufacturing a surface-modified electrode active material including the steps of: preparing a solid electrolyte dispersion containing an oxide-based solid electrolyte and a solvent; coating the solid electrolyte dispersion onto a surface of an electrode active material; and heat-treating the coated electrode active material to form a surface-modified electrode active material. An electrode for a lithium secondary battery comprising: a metal current collector; and an active material layer that is formed on the metal current collector and includes a surface-modified electrode active material manufactured by the method. A lithium secondary battery comprising the electrode as a positive electrode; a negative electrode; and an electrolyte including a lithium salt and a non-aqueous organic solvent.

## Description

### [TECHNICAL FIELD]

### CROSS-REFERENCE TO RELATED APPLICATION(S)

This application is a national phase entry of International Application No. PCT/KR2024/013127, which was filed on September 2, 2024 and claims priority from and the benefit of Korean Patent Application No. 10-2023-0118577 filed on September 6, 2023, all of which are incorporated herein by reference in their entirety.

### TECHNICAL FIELD

The present disclosure relates to a method for manufacturing a surface-modified electrode active material that can improve output characteristics and low-temperature characteristics, etc. of a lithium secondary battery, and an electrode and lithium secondary battery manufactured thereby.

### [BACKGROUND]

Recently, demand for high-capacity, high-output, long-life and high-stability lithium secondary batteries has been increased as an application area of lithium secondary batteries has rapidly expanded to power storage supply of large-area devices, such as automobiles and power storage devices, as well as electricity, electronics, communication, and power supply of electronic devices such as computers.

A lithium secondary battery is generally configured to include a positive electrode, a negative electrode, a separation membrane, and an electrolyte containing a lithium salt and an organic solvent, wherein movement of lithium ions occurs through the electrolyte in a charge and discharge process.

Lithium ions in the electrolyte exist in a solvated state surrounded by an organic solvent. Therefore, in order for the lithium ions in this electrolyte to move and be inserted into the electrode active material, lithium ions undergo a desolvation process in which lithium ions are separated or desorbed from the organic solvent molecules. Therefore, smooth progress of this desolvation process may affect the output, resistance, stability or the like of a lithium secondary battery.

Meanwhile, lithium cobalt oxide (LiCoO₂), lithium nickel oxide (LiNiO₂), lithium manganese oxide (LiMnO₂ or LiMn₂O₄, etc.), or a lithium iron phosphate compound (LiFePO₄) has been used as a positive electrode active material of the lithium secondary battery. Particularly, NCM-based lithium composite transition metal oxides have been developed in order to improve low thermal stability while maintaining excellent reversible capacity of LiNiO₂, however, conventional NCM-based lithium composite transition metal oxides were not sufficient in capacity characteristics and thus have been limited in application.

In order to address such limitation, studies have recently been made to increase a nickel(Ni) content in the NCM-based lithium composite transition metal oxides. However, in the case of a high-concentration nickel positive electrode active material, the capacity increases, but a rapid desorption of oxygen occurs due to the oxidation of Ni²⁺ to Ni³⁺/⁴⁺ in accordance with the depth of charge, and the desorbed oxygen reacts with an electrolytic solution to change the inherent properties of the material, which may cause instability in the lattice structure and even collapse of the structure.

Therefore, there is a continuing need to develop a technology that can accelerate the desolvation of lithium ions in the electrolyte, thereby improving the output characteristics of a lithium secondary battery as well as maintaining excellent low-temperature characteristics.

### [DETAILED DESCRIPTION OF THE INVENTION]

### [Technical Problem]

Thus, it is an object of the present disclosure to provide a method for manufacturing a surface-modified electrode active material that can accelerate the desolvation of lithium ions in the electrolyte, thereby improving the output characteristics of a lithium secondary battery as well as maintaining excellent low-temperature characteristics such as high output at low temperatures.

It is another object of the present disclosure to provide an electrode and lithium secondary battery manufactured thereby, which exhibit improved output characteristics and low-temperature characteristics.

### [Technical Solution]

Hereinafter, a method for manufacturing a surface-modified electrode active material, and the like according to specific aspects of the present disclosure will be described.

Terms or words used in the specification and the appended claims should not be construed as limited to ordinary or dictionary meanings, and the present disclosure should be construed with meanings and concepts that are consistent with the technical idea of the present disclosure based on the principle that the inventors may appropriately define concepts of the terms to appropriately describe their own invention in the best way.

The terms used herein are provided to describe exemplary aspects but not to limit the inventive concept. The singular forms include plural forms unless the context clearly indicates otherwise.

It should be understood that the terms "comprise," "include", "have", etc. are used herein to specify the presence of stated features, integers, steps, components or combinations thereof, but do not preclude the presence or addition of one or more other features, integers, steps, components, or combinations thereof.

### Method for manufacturing a surface-modified electrode active material

According to an aspect of the present disclosure, there is provided a method for manufacturing a surface-modified electrode active material, the method comprising the steps of: preparing a solid electrolyte dispersion containing an oxide-based solid electrolyte and a solvent; coating the solid electrolyte dispersion onto a surface of an electrode active material; and heat-treating the coated electrode active material to form a surface-modified electrode active material.

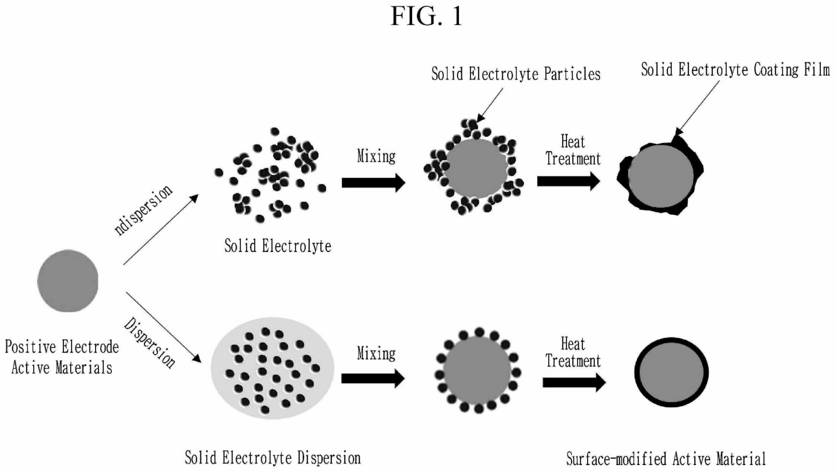

Particularly, referring to FIG. 1, the method for manufacturing the surface-modified electrode active material can pre-disperse the oxide-based solid electrolyte in a solvent, so that the oxide-based solid electrolyte can be evenly distribute on the surface of the electrode active material. This can be distinguished from a conventional surface-modified active material in which the oxide-based solid electrolyte particles aggregate with each other and are not evenly distributed. Thus, the oxide-based solid electrolyte particles can reduce the activation energy associated with the desolvation process of lithium ions in the electrolyte at the interface where the electrode active material layer and the electrolyte come into contact with each other, and thus accelerate the desolvation of the lithium ions. Additionally, this can improve the lithium ion conductivity around the electrode active material particles.

First, the oxide-based solid electrolyte can be uniformly dispersed in a solvent to prepare a solid electrolyte dispersion containing an oxide-based solid electrolyte and a solvent. Through this, the oxide-based solid electrolyte can be pre-dispersed in the solvent, and the oxide-based solid electrolyte can be evenly distributed on the surface of the electrode active material in the coating step described below.

In an exemplary aspect, the step of preparing the dispersion may comprise mixing 5 to 70 parts by weight of an oxide-based solid electrolyte and 30 to 95 parts by weight of a solvent. In the case of mixing the oxide-based solid electrolyte and the solvent within the above range, if the content of the oxide-based solid electrolyte is 70 parts by weight or more, it is difficult to control the D50 value to 100 nm to 1 µm, and if the content of the solid electrolyte is 5 parts by weight or less, the dispersion energy efficiency transferred to the particle surface may decrease, and the time required for dispersion may become longer.

In an exemplary aspect, in the step of preparing the dispersion, the oxide-based solid electrolyte can be dispersed in the solvent using one or more of the following methods: sonication, high-shear mixer, high-pressure homogenizer, and bead-milling.

In particular, in order to increase the dispersion efficiency of a high-concentration oxide-based solid electrolyte dispersion having a nano particle size and minimize the oxidation of the oxide-based solid electrolyte due to heat generated during the dispersion process, the dispersion can be performed using a bead grinding method under a condition where the temperature of the dispersion is within maximum 40°C and the dispersion time is within 3 hours.

In an exemplary aspect, the oxide-based solid electrolyte in the solid electrolyte dispersion may have one or more particle size distributions of D50: 100 nm to 1 µm and D90: 400 nm to 1.5 µm. The electrolyte may have, for example, one or more particle size distributions of D50: 300 to 700 nm, D90: 400 to 900 nm, and span: 1 or less. When the oxide-based solid electrolyte particles are uniformly distributed in the above ranges, it is possible to achieve excellent output characteristics and low-temperature characteristics.

In an exemplary aspect, any solid electrolyte that has a lithium ion source including lithium in its structure, and has a form of lithium metal oxide or lithium metal phosphate can be used as the oxide-based solid electrolyte.

Specific examples thereof include at least one lithium metal oxide or lithium metal phosphate selected from Nasicon-type solid electrolyte, Lisicon-type solid electrolyte, Garnet-type solid electrolyte, Perovskite-type solid electrolyte, and LiPON-type solid electrolyte. More specific examples thereof include at least one selected from the group consisting of LAGP(lithium aluminum germanium phosphate)-based compound, LLZO(lithium lanthanum zirconium oxide)-based compound, LATP(lithium aluminum titanium phosphate)-based compound, LLZTO(lithium lanthanum zirconium tantalum oxide)-based compound, LLTO(lithium lanthanum titanium oxide)-based compound, LSTP(lithium silicon titanium phosphate)-based compound, and LGPO(lithium germanium phosphate)-based compound.

Among these, from the viewpoint of accelerating the desolvation of lithium ions at an interface between the active material layer and the electrolyte and improving the ionic conductivity and output of a lithium secondary battery, a Nasicon-type solid electrolyte such as the LAGP-based compound or LATP-based compound can be appropriately used.

Next, the solid electrolyte dispersion may be coated onto the surface of the electrode active material. Specifically, the solid electrolyte dispersion may be mixed with the positive electrode active material, and a uniform coating layer may be formed so that nanoparticles of the oxide-based solid electrolyte dispersion are uniformly distributed on the surface of the positive electrode active material.

In an exemplary aspect, the step of coating the solid electrolyte dispersion may be performed by one or more of the following methods: spray coating, high-speed homogeneous mixing, and fluidized bed coating.

In an exemplary aspect, the positive electrode active material may be a compound capable of reversibly intercalating and deintercalating lithium, and specifically, it may include lithium metal oxide containing lithium and at least one metal such as iron, cobalt, manganese, nickel, or aluminum.

Specifically, the lithium metal oxide may include lithium-manganese-based oxide (e.g., LiMnO₂, LiMn₂O₄, etc.), lithium-cobalt-based oxide (e.g., LiCoO₂, etc.), lithium-nickel-based oxide (e.g., LiNiO₂, etc.), lithium-nickel-manganese-based oxide (e.g., LiNi_{1-Y}Mn_{Y}O₂ (where 0<Y<1), LiMn_{2-Z}Ni_{Z}O₄ (where 0<Z<2), etc.), lithium-nickel-cobalt-based oxide (e.g., LiNi_{1-Y1}Co_{Y1}O₂ (where 0<Y1<1), etc.), lithium-manganese-cobalt-based oxide (e.g., LiCo_{1-Y2}Mn_{Y2}O₂ (where 0<Y2<1), LiMn_{2-Z1}Co_{Z1}O₄ (where 0<Z1<2), etc.), lithium-nickel-manganese-cobalt-based oxide (e.g., Li(NiₚCo_{q}Mnᵣ)O₂ (where 0<p<1, 0<q<1, 0<r<1, and p+q+r=1) or Li(Niₚ₁Co_{q1}Mnᵣ₁)O₄ (where 0<p1<2, 0<q1<2, 0<r1<2, and p1+q1+r1=2), etc.), or lithium-nickel-cobalt-transition metal(M) oxide (e.g., Li(Niₚ₂Co_{q2}Mnᵣ₂Mₛ₂)O₂ (where M is selected from the group consisting of Al, Fe, V, Cr, Ti, Ta, Mg and Mo, and p2, q2, r2, and s2 are atomic fractions of each independent elements, wherein 0<p2<1, 0<q2<1, 0<r2<1, 0<s2<1, and p2+q2+r2+s2=1), etc.), lithium iron phosphate (e.g., Li₁₊ₐFe₁₋ₓMₓ(PO_{4-b})X_{b} (where M is at least one selected from Al, Mg, and Ti, X is at least one selected from F, S and N, -0.5 ≤ a ≤ 0.5, 0 ≤ x ≤ 0.5, 0 ≤ b ≤ 0.1), or the like, and any one thereof or a compound of two or more thereof may be used.

Among these, the positive electrode active material includes lithium metal oxide containing lithium, and two or more metals selected from the group consisting of nickel, manganese, cobalt, and aluminum, wherein the lithium metal oxide may contain 60 mol% or more, or 60 to 99 mol%, or 70 to 95 mol% of nickel, based on the total metal content excluding lithium. Such a lithium metal oxide may be represented, for example, by the following Chemical Formula 1:

[Chemical Formula 1] LiₓNiₐCo_{b}M¹_{c}M²_{d}O₂

wherein in Chemical Formula 1, the M¹ may be one or more selected from Mn and Al, or a combination thereof, M² may be one or more selected from the group consisting of Zr, B, W, Mg, Ce, Hf, Ta, La, Ti, Sr, Ba, F, P and S, 0.90≤x≤1.1, or 0.95≤x≤1.08, or 1.0≤x≤1.08, and 0.60≤a<1.0, or 0.70≤a≤0.99, or 0.80≤a≤0.95.

Meanwhile, the positive electrode active material may have an average particle size (D50) of 4 to 15 µm, or 7 to 13 µm, or 8 to 12 µm.

As the lithium metal oxide containing such a high content of nickel is used as a positive electrode active material, and combined with an oxide-based solid electrolyte, it is possible to further improve the output and capacity characteristics of a lithium secondary battery.

In an exemplary aspect, from the viewpoint of accelerating the desolvation of lithium ions at the interface between the active material layer and the electrolyte and improving the lithium ion conductivity, without inhibiting the insertion and desorption process of lithium ions by the positive electrode active material, the oxide-based solid electrolyte may be included in an amount of 0.3 to 5 parts by weight based on 100 parts by weight of the electrode active material.

Next, the coated electrode active material may be heat-treated to form a surface-modified electrode active material.

In an exemplary aspect, heat treatment is preferably performed at a temperature equal to or higher than a glass transition temperature(Tg) of the oxide-based solid electrolyte, and after the heat treatment, the oxide-based solid electrolyte nanoparticles uniformly coated on the active material surface are baked to form a uniform coating thin film layer, thereby forming a modified electrode active material.

In an exemplary aspect, the heat-treating step may comprise subjecting to a baking treatment at a temperature of 600 to 1000°C for 1 to 3 hours to form a surface-modified electrode active material.

Meanwhile, the solvent may be removed prior to the baking treatment. Specifically, the electrode active material coated with the oxide-based solid electrolyte is first dried at 130°C for 2 hours to remove the NMP solvent. The dried oxide-based solid electrolyte-coated active material may be subjected to a baking treatment at 800°C for 2 hours to form a surface-modified electrode active material.

### Electrode for lithium secondary battery and lithium secondary battery

According to another aspect of the present disclosure, there is provided an electrode for a lithium secondary battery comprising: a metal current collector; and an active material layer that is formed on the metal current collector and comprises a surface-modified electrode active material manufactured by the above-mentioned method for manufacturing a surface-modified electrode active material.

The lithium secondary battery electrode according to one aspect and the lithium secondary battery including the same will be described in more detail below. However, in the following, an aspect in which the lithium secondary battery electrode becomes a positive electrode is mainly described, but it goes without saying that the scope of the disclosure is not limited thereto, and the electrode of one aspect may also become a negative electrode.

The positive electrode for a lithium secondary battery according to one aspect includes a metal current collector. The metal current collector is not particularly limited as long as it has conductivity while not causing a chemical changes in the battery, and for example, stainless steel, aluminum, nickel, titanium, fired carbon, or aluminum or stainless steel whose surface is treated with carbon, nickel, titanium, silver, or the like may be used.

In addition, the active material layer on the metal current collector may, in addition to the surface-modified electrode active material, further include a conductive material and an oxide-based solid electrolyte having a lithium ion source, and may optionally further include a binder.

Meanwhile, the conductive material included in the active material layer is a component for further improving the conductivity of the positive electrode active material. Such a conductive material is not particularly limited as long as it has conductivity while not causing a chemical change in the battery, and, for example, a conductive material, including: carbon powder such as carbon black, acetylene black, Ketjen black, channel black, furnace black, lamp black, or thermal black; graphite powder such as natural graphite with a well-developed crystal structure, artificial graphite, or graphite; conductive nanomaterials such as carbon nanofibers or carbon nanotubes; fluorinated carbon powder; conductive powder such as aluminum powder, and nickel powder; conductive whiskers such as zinc oxide whiskers and potassium titanate whiskers; conductive metal oxide such as titanium oxide; or conductive materials such as polyphenylene derivatives, may be used. Among these, the conductive material includes conductive nanomaterials such as carbon nanotubes or carbon nanofibers, which can further lower the resistance of the lithium secondary battery containing a positive electrode of one aspect and further improve output characteristics, and the like.

Typically, the conductive material may be included in an amount of 1 to 20% by weight, or 1 to 15% by weight, or 1 to 10% by weight, based on the total weight of the positive electrode active material layer.

The binder selectively included in the active material layer is a component that assists in the bonding between the positive electrode active material and the conductive material and in the bonding to the current collector. Examples of the binder may include polyvinylidene fluoride, polyvinyl alcohol, carboxymethylcellulose(CMC), starch, hydroxypropyl cellulose, regenerated cellulose, polyvinylpyrrolidone, polytetrafluoroethylene, polyethylene(PE), polypropylene, ethylene-propylene-diene monomer, sulfonated ethylene-propylene-diene monomer, nitrile-based rubber, styrene-butadiene rubber, fluororubber or the like. Mixtures or copolymers of two or more selected from these may also be used.

Typically, the binder may be included in an amount of 1 to 20% by weight, or 1 to 15% by weight, or 1 to 10% by weight based on the total weight of the positive electrode active material layer.

In addition, a filler may be optionally added to the positive electrode as a component for inhibiting the expansion thereof. Such a filler is not particularly limited as long as it can inhibit the expansion of the electrode while not causing a chemical change in the battery, and examples thereof may include olefinic polymers such as polyethylene and polypropylene; fibrous materials such as glass fibers and carbon fibers.

The positive electrode of one aspect described above can be prepared, for example, by dispersing and mixing the positive electrode active material, the oxide-based solid electrolyte, the binder, the conductive material and the like in a dispersion medium (solvent) to form a slurry, and coating the slurry onto a metal current collector, followed by drying and rolling. At this time, the dispersion medium may be NMP(N-methyl-2-pyrrolidone), DMF(dimethyl formamide), DMSO(dimethyl sulfoxide), ethanol, isopropanol, water, or a mixture thereof, but are not necessarily limited thereto.

In addition, there is provided a lithium secondary battery comprising: a positive electrode; a negative electrode; and an electrolyte containing a lithium salt and a non-aqueous organic solvent, wherein the above-mentioned electrode for a lithium secondary battery is included as a positive electrode. Such a lithium secondary battery according to the other aspects can exhibit excellent output characteristics as well as low-temperature characteristics.

In the lithium secondary battery of the other aspects, the negative electrode may have a conventional configuration known in the art. For example, the negative electrode may include a negative electrode current collector, and a negative electrode active material layer formed on the negative electrode current collector, wherein the negative electrode active material layer may include, for example, a negative electrode active material and, if necessary, additives such as a conductive material, a binder, and a filler. In addition, such a negative electrode can be formed by a general method of dispersing and mixing each component of the negative electrode active material layer in a dispersion medium (solvent) to form a slurry, coating the slurry onto a negative electrode current collector, followed by drying and rolling.

At this time, the negative electrode current collector may be platinum(Pt), gold(Au), palladium(Pd), iridium(Ir), silver(Ag), ruthenium(Ru), nickel(Ni), stainless steel (STS), copper(Cu), molybdenum(Mo), chromium(Cr), carbon(C), titanium(Ti), tungsten(W), ITO(In doped SnO₂), FTO(F doped SnO₂), or an alloy thereof, or copper(Cu) or stainless steel whose surface is treated with carbon(C), nickel(Ni), titanium(Ti) or silver(Ag), or the like, but is not necessarily limited thereto. The shape of the negative electrode current collector may be in the form of a foil, a film, a sheet, a punched form, a porous body, a foam or the like.

Further, as the negative electrode active material, a compound capable of reversible intercalation and deintercalation of lithium may be used. A specific example thereof may be a carbonaceous material such as artificial graphite, natural graphite, graphitized carbon fiber or amorphous carbon; a metallic compound capable of alloying with lithium, such as Si, Al, Sn, Pb, Sb, Zn, Bi, In, Mg, Ga, Cd, a Si alloy, a Sn alloy or an Al alloy; a metal oxide capable of doping and dedoping lithium such as SiOβ(0 < β < 2), SnO₂, vanadium oxide, or lithium vanadium oxide; or a composite including the metallic compound and the carbonaceous material such as a Si-C composite or a Sn-C composite, and any one or a mixture of two or more thereof may be used. Further, as the negative electrode active material, a metal lithium thin film may be used.

In addition, as a carbonaceous material, both low-crystalline carbon and high-crystalline carbon may be used. Representative examples of the low-crystalline carbon include soft carbon and hard carbon, and representative examples of the high-crystalline carbon include amorphous, sheet-type, flake-type, spherical or fiber-type natural or artificial graphite, Kish graphite, pyrolytic carbon, mesophase pitch-based carbon fiber, meso-carbon microbeads, mesophase pitches, and high-temperature calcined carbon such as petroleum or coal tar pitch derived cokes.

The above-mentioned negative electrode active material may be included in an amount of 60 to 99% by weight, or 70 to 99% by weight, or 80 to 98% by weight, based on the total weight of the negative electrode active material layer.

In the other aspects, the negative electrode may not include a negative electrode active material layer, but may include only a negative electrode current collector. In such a negative electrode, lithium ions moved from the positive electrode in a charge and discharge process are electrodeposited on the negative electrode current collector to form a lithium metal layer, and this lithium metal layer can function as a negative electrode active material.

On the other hand, the binder and conductive material included in the negative electrode active material layer can be the same as those previously described for the positive electrode, and therefore, further description thereof will be omitted. Furthermore, when the lithium secondary battery electrode of the above-described aspect is used as the negative electrode, the negative electrode active material layer may further include an oxide-based solid electrolyte having the lithium ion source described above. In this case, the oxide-based solid electrolyte may satisfy the above-mentioned D50 ratio to the oxide-based solid electrolyte particles.

The lithium secondary battery of the above-described other aspects further includes an electrolyte containing lithium salt and a non-aqueous organic solvent. Such an electrolyte functions as a transfer medium for lithium ions between the positive electrode and the negative electrode, wherein such lithium ions exist in the electrolyte in a solvated state, while they can be inserted into the electrode active material through desolvation at the interface between the electrolyte and the electrode. The secondary battery of another aspect can accelerate this desolvation and exhibit more improved output characteristics as described above.

The lithium salt contained in the electrolyte is used as a medium for transferring ions within a lithium secondary battery. For example, the lithium salt may include Li⁺ as a cation, and may together include an anion selected from the group consisting of F⁻, Cl⁻, Br⁻, I⁻, NO₃⁻, N(CN)₂⁻, BF₄⁻, ClO₄⁻, B₁₀Cl₁₀⁻, AlCl₄⁻, AlO₂⁻, PF₆⁻, CF₃SO₃⁻, CH₃CO₂⁻, CF₃CO₂⁻, AsF₆⁻, SbF₆⁻, CH₃SO₃⁻, (CF₃CF₂SO₂)₂N⁻, (CF₃SO₂)₂N⁻, (FSO₂)₂N⁻, BF₂C₂O₄⁻, BC₄O₈⁻, PF₄C₂O₄⁻, PF₂C₄O₈⁻, (CF₃)₂PF₄⁻, (CF₃)₃PF₃⁻, (CF₃)₄PF₂⁻, (CF₃)₅PF⁻, (CF₃)₆P⁻, C₄F₉SO₃⁻, CF₃CF₂SO₃⁻, CF₃CF₂(CF₃)₂CO⁻, (CF₃SO₂)₂CH⁻, CF₃(CF₂)₇SO₃⁻ and SCN⁻.

Specifically, the lithium salt may include at least one selected from the group consisting of LiCl, LiBr, LiI, LiBF₄, LiClO₄, LiB₁₀Cl₁₀, LiAlCl₄, LiAlO₂, LiPF₆, LiCF₃SO₃, LiCH₃CO₂, LiCF₃CO₂, LiAsF₆, LiSbF₆, LiCH₃SO₃, LiFSI (Lithium bis(fluorosulfonyl)imide, LiN(SO₂F)₂), LiBETI (lithium bis(perfluoroethanesulfonyl)imide, LiN(SO₂CF₂CF₃)₂ and LiTFSI (lithium bis(trifluoromethanesulfonyl)imide, LiN(SO₂CF₃)₂).

The concentration of the lithium salt can be appropriately changed within the normally usable range, and may be included in the electrolyte at a concentration of 0.5M to 6M, or at a concentration of 1M to 5M.

In a more specific example, the electrolyte may include the lithium salt at a relatively low concentration of 0.5M or more and less than 2M, or 0.7M to 1.5M. Even in such a case, as desolvation of lithium ions is accelerated by the action of the electrode of the above-mentioned one aspect, the lithium secondary battery of another aspect may exhibit improved output characteristics. As a result, it is possible to not only solve problems such as an increase in electrolyte viscosity, a decrease in fluidity, and a decrease in electrolyte ionic conductivity and battery output at low temperatures due to the application of an electrolyte composition containing the lithium salt at a high concentration, but also achieve excellent low-temperature characteristics of a lithium secondary battery.

On the other hand, in the other aspects of the disclosure, the electrolyte may include a lithium salt at a high concentration of 2M to 6M, or 2.5M to 5.5M. In such a case, by including a high concentration of lithium salts and applying the electrode of an aspect, desolvation of lithium ions can be further accelerated, and the output characteristics of a secondary battery can be further improved.

Further, by applying the electrode of one aspect, the lithium ion conductivity can be improved and the resistance can be reduced even at low temperatures. Thereby, it is possible to reduce deterioration in low-temperature output characteristics due to high concentration of lithium salts, and the like.

On the other hand, the kind of a non-aqueous organic solvent that can be included in the electrolyte is not particularly limited, and any organic solvent that has been known to be applicable to the electrolyte of a lithium ion battery can be used. Examples of such organic solvents include at least one selected from the group consisting of a carbonate-based solvent, an ether-based solvent, a nitrile-based solvent, a phosphate-based solvent, and a sulfone-based solvent.

More specifically, the carbonate-based solvent may include dimethyl carbonate, diethyl carbonate, dipropyl carbonate, ethylene carbonate, propylene carbonate, butylene carbonate, fluoroethylene carbonate, methyl propyl carbonate, ethyl methyl carbonate, ethyl propyl carbonate, methyl(2,2,2-trifluoroethyl)carbonate, or the like, and the phosphate-based solvent may include trimethyl phosphate, triethyl phosphate, 2-(2,2,2-trifluoroethoxy)-1,3,2-dioxaphosphorane 2-oxide, or the like.

Further, the ether-based solvent may include dibutyl ether, tetraglyme, diglyme, dimethoxyethane, or a tetrahydrofuran derivative such as 2-methyltetrahydrofuran, and the nitrile-based solvent may include succinonitrile, adiponitrile, sebaconitrile, acetonitrile, propionitrile, or the like. Further, the sulfone-based solvent may include dimethyl sulfone, ethylmethyl sulfone, sulforane, or the like.

Meanwhile, the electrolyte may, in addition to the lithium salt and the non-aqueous organic solvent, further include a diluent that exhibits a solubility of the lithium salt that is at least 10 times lower than that of the non-aqueous organic solvent. Such a diluent is an organic solvent that is miscible with the non-aqueous organic solvent without substantially showing solubility in the lithium salt. For example, it may be an ether-based solvent having a fluorinesubstituted alkyl group, and more specifically, it may include one or more selected from the group consisting of 1,1,2,2-tetrafluoroethyl-2,2,3,3-tetrafluoropropyl ether(TTE), bis(2,2,2-trifluoroethyl)ether (BTFE), 1, 1,2,2-tetrafluoroethyl-2,2,2-trifluoroethyl ether(TFTFE), methoxynona fluorobutane(MOFB) and ethoxynona fluorobutane(EOFB).

When such a diluent is further included, a locally high concentration of lithium salt may exist in the non-aqueous organic solvent in the electrolyte, and a lithium salt may not substantially exist in the diluent. As a locally high concentration of lithium salt exists in a solvated form in the electrolyte in this way, the output characteristics of the lithium secondary battery can be further improved, and also the increase in viscosity and the decrease in fluidity of the electrolyte can be reduced. In addition, if the electrode of an aspect is applied together with this locally high concentration of salt electrolyte, the lithium ion conductivity can be improved and the resistance can be reduced even at low temperatures, thereby reducing the deterioration of low-temperature output characteristics caused by high-concentration lithium salt, etc.

The amount of the diluent used can be adjusted depending on the type of non-aqueous organic solvent and lithium salt, or the overall concentration of the lithium salt. For example, the diluent : the non-aqueous organic solvent may be included in the electrolyte at a molar ratio of 1:0.2 to 1:5, or 1:0.5 to 1:2.

Meanwhile, the lithium secondary battery of the above-described other aspects may further include a porous separation membrane interposed between the positive electrode and the negative electrode.

Such a porous separation membrane can be made of olefinic polymers such as polyethylene and polypropylene, glass fiber, etc. in the form of a sheet, a multilayer membrane, a microporous film, a woven fabric, and a nonwoven fabric, or the like, but is not necessarily limited thereto. However, it may be preferable to apply porous polyethylene or porous glass fiber non-woven fabric (glass filter) as a separation membrane, and it may be more preferable to apply a porous polyethylene as a separation membrane. The separation membrane may be an insulating thin film with high ion permeability and mechanical strength, and the pore diameter of the separation membrane may generally range from 0.01 to 10 µm, and the thickness may generally range from 5 to 300 µm, but are not limited thereto.

In addition, in the other aspects of the lithium secondary battery, the separation membrane may not be interposed, but the above-mentioned electrolyte may be interposed between the positive electrode and the negative electrode in the form of an electrolyte membrane or an electrolyte film. At this time, the electrolyte membrane or the electrolyte film may be a form containing the above-mentioned lithium salt and non-aqueous organic solvent in a polymer matrix, As the polymer matrix, a well-known polymer-based solid electrolyte or the like may be used. In this case, the lithium secondary battery of the other aspects may be a semi-solid-state battery that uses a liquid electrolyte and a solid-state electrolyte in combination.

Meanwhile, the lithium secondary battery of the other aspects may be prepared according to a conventional method in the art. For example, the lithium secondary battery can be prepared by housing an electrode assembly including a positive electrode, a negative electrode, and a separation membrane (or electrolyte membrane) in a case, and injecting and impregnating the above-mentioned electrolyte in the case.

Such a lithium secondary battery can be applied not only to a battery cell used as power sources for small-sized devices, but can also be particularly suitably used as a unit battery in a battery module, which is a power source for medium-sized and large-sized devices.

### [Advantageous Effects]

A method for manufacturing a surface-modified electrode active material according to an aspect of the present disclosure can pre-disperse an oxide-based solid electrolyte in a solvent, and uniformly distribute the oxide-based solid electrolyte on the surface of the electrode active material. Therefore, the oxide-based solid electrolyte particles can reduce the activation energy associated with the desolvation process of lithium ions in the electrolyte at the interface where the electrode active material and the electrolyte come into contact with each other, thereby accelerating desolvation. This can also improve the lithium ion conductivity around the electrode active material particles.

Furthermore, since it is possible to improve the output characteristics of a lithium secondary battery even without applying new electrolyte compositions such as containing a high concentration of lithium salts, problems such as an increase in electrolyte viscosity, a decrease in fluidity, and a decrease in electrolyte ionic conductivity and battery output at low temperatures due to application of the new electrolyte composition can be solved, and excellent low-temperature characteristics of a lithium secondary battery can be achieved.

In addition, even when an electrolyte composition containing the high-concentration of lithium salts, etc. is applied together, application of the electrode of the present disclosure can facilitate desolvation of lithium ions, thereby improving lithium ion conductivity and reducing resistance.

Therefore, the present disclosure can greatly contribute to the development of nextgeneration lithium secondary batteries that exhibit improved output characteristics and low-temperature characteristics.

### [BRIEF DESCRIPTION OF THE DRAWINGS]

FIG. 1 shows the comparison between a manufacturing method according to the present disclosure in which an oxide-based solid electrolyte is pre-dispersed in a solvent so that the oxide-based solid electrolyte is evenly distributed on the surface of an electrode active material, and a conventional method in which the oxide-based solid electrolyte particles in the surface-modified active material are aggregated with each other and are not evenly dispersed.
FIG. 2 shows SEM and EDS Ti element mapping images of the positive electrode active materials according to Comparative Example 1 and Example 2 of the present disclosure.
FIG. 3 shows the results of evaluating electrochemical characteristics for the lithium secondary batteries manufactured using the positive electrodes according to Examples 2 and 3, and Comparative Examples 2 and 3 of the present disclosure.
FIG. 4 is a graph showing a comparison of the results of measuring the resistance by state of charge(SOC) for the lithium secondary batteries manufactured using the positive electrodes according to Examples 2 and 3, and Comparative Examples 2 and 3 of the present disclosure.

### [DETAILED DESCRIPTION OF THE EMBODIMENTS]

Hereinafter, the present disclosure will be described in more detail with reference to specific examples. However, the following examples are only exemplary aspects for facilitating understanding of the disclosure, and are not intended to limit the scope of the disclosure.

### Example 1-1: Manufacturing of surface-modified positive electrode active material

25 g of D50: 300 nm Li_{1.3}Al_{0.3}Ti_{1.7}(PO₄)₃ oxide-based solid electrolyte (LATP) and 50 g of NMP were mixed, beads were added to the mixed liquid, and then subjected to dispersion treatment for 40 minutes using a spike mill to prepare a solid electrolyte dispersion.

Lithium nickel cobalt manganese composite oxide (NCM 603; D50: *5* µm) containing 80 mol% of nickel among all the transition metals was used as a positive electrode active material, the prepared dispersion was added to 5 kg of a positive electrode active material, and then mixed and stirred at 3000 rpm for 30 minutes using a homogeneous mixer. The NMP solvent was dried at 130°C for 1 hour, and then subjected to a baking treatment at 800°C for 2 hours to manufacture a surface-modified positive electrode active material on which a uniform solid electrolyte coating film was formed.

### Example 1-2: Manufacturing of surface-modified positive electrode active material

50 g of D50: 300 nm Li_{1.3}Al_{0.3}Ti_{1.7}(PO₄)₃ oxide-based solid electrolyte (LATP) and 50 g of NMP were mixed, a bead mill was added to the mixed liquid, and then subjected to dispersion treatment for 40 minutes using a spike mill to prepare a solid electrolyte dispersion.

Lithium nickel cobalt manganese composite oxide (NCM 603; D50: 5 µm) containing 65 mol% of nickel among all the transition metals was used as a positive electrode active material, the prepared dispersion was added to 5 kg of a positive electrode active material, and then mixed and stirred at 3000 rpm for 30 minutes using a homogeneous mixer. The NMP solvent was dried at 130°C for 1 hour, and then subjected to a baking treatment at 800°C for 2 hours to manufacture a surface-modified positive electrode active material on which a uniform solid electrolyte coating film was formed.

### Example 2: Manufacturing of lithium secondary battery

Carbon nanotubes were used as the conductive material, and polyvinylidene fluoride (PVDF) was used as the binder. 97 parts by weight of the surface-modified positive electrode active material of Example 1-1, 1.5 parts by weight of the conductive material, and 1.5 parts by weight of the binder were mixed to prepare a positive electrode active material slurry. The prepared slurry was coated onto an aluminum current collector and dried to prepare a positive electrode. At this time, the particle size distribution of the oxide-based solid electrolyte(LATP) was measured using a laser diffraction particle size measuring device (Malvern Mastersizer 3000), and was D10: 0.234 µm, D50: 0.345 µm, D90: 0.495 µm, and span: 0.757. Graphite was used as the negative active material, and the negative active material: conductive material: binder was mixed in a weight ratio of 96.5: 1.5:2 without using an oxide-based solid electrolyte, and the same process as for the positive electrode was performed to manufacture the negative electrode.

The prepared positive electrode and negative electrode were positioned so as to face each other, a polyethylene(PE) separation membrane with a thickness of 15 µm was interposed between them, and filled with an electrolytic solution to manufacture a bi-cell type lithium secondary battery. At this time, the electrolytic solution was manufactured by dissolving LiPF₆ at a concentration of 1.0 M in an organic solvent consisting of ethylene carbonate/ethyl methyl carbonate (EC/EMC mixed volume ratio of 3/7).

### Example 3: Manufacturing a lithium secondary battery

Carbon nanotubes were used as the conductive material, and polyvinylidene fluoride (PVDF) was used as the binder. 97 parts by weight of the surface-modified positive electrode active material of Example 1-2, 1.5 parts by weight of the conductive material, and 1.5 parts by weight of the binder were mixed to prepare a positive electrode active material slurry. The prepared slurry was coated onto an aluminum current collector and dried to prepare a positive electrode. At this time, the particle size distribution of the oxide-based solid electrolyte(LATP) was D10: 0.237 µm, D50: 0.347 µm, D90: 0.497 µm, and span: 0.749. Graphite was used as the negative active material, and the negative active material: conductive material: binder was mixed in a weight ratio of 96.5:1.5:2 without using an oxide-based solid electrolyte, and the same process as for the positive electrode was performed to manufacture the negative electrode.

The prepared positive electrode and negative electrode were positioned so as to face each other, a polyethylene(PE) separation membrane with a thickness of 15 µm was interposed between them, and filled with an electrolytic solution to manufacture a bi-cell type lithium secondary battery. At this time, the electrolytic solution was manufactured by dissolving LiPF₆ at a concentration of 1.0 M in an organic solvent consisting of ethylene carbonate/ethyl methyl carbonate (EC/EMC mixed volume ratio of 3/7).

### Comparative Example 1: Positive electrode active material

A lithium nickel cobalt manganese composite oxide (NCM 603; D50: 5 µm) containing 65 mol% of nickel among all the transition metals was used.

### Comparative Example 2: Manufacturing lithium secondary battery

97 parts by weight of the positive electrode active material of Comparative Example 1, 1.5 parts by weight of the conductive material, and 1.5 parts by weight of PVDF were mixed to prepare a positive electrode active material slurry. The prepared slurry was coated onto an aluminum current collector and dried to prepare a positive electrode. The conductive material, binder, negative electrode, and electrolyte were the same as those used in Example 2.

The prepared positive electrode and negative electrode were positioned so as to face each other, and a polyethylene(PE) separation membrane with a thickness of 20 µm was interposed between them, and filled with an electrolytic solution to manufacture a bi-cell type lithium secondary battery.

### Comparative Example 3: Sample whose pre-dispersion was not applied

96 parts by weight of the positive electrode active material of Comparative Example 1, 1.5 parts by weight of the conductive material, 1.5 parts by weight of PVDF, and 1 part by weight of oxide-based solid electrolyte(LATP) were mixed to prepare a positive electrode active material slurry. The prepared slurry was coated onto an aluminum current collector and dried to prepare a positive electrode. The conductive material, binder, negative electrode, and electrolyte were the same as those used in Example 2. The particle size distribution of the oxide-based solid electrolyte(LATP) was D10: 0.302 µm, D50: 0.512 µm, D90: 3.3 µm, and span: 5.766.

The prepared positive electrode and negative electrode were positioned so as to face each other, and a polyethylene(PE) separation membrane with a thickness of 20 µm was interposed between them, and filled with an electrolytic solution to manufacture a bi-cell type lithium secondary battery.

### Experimental Example

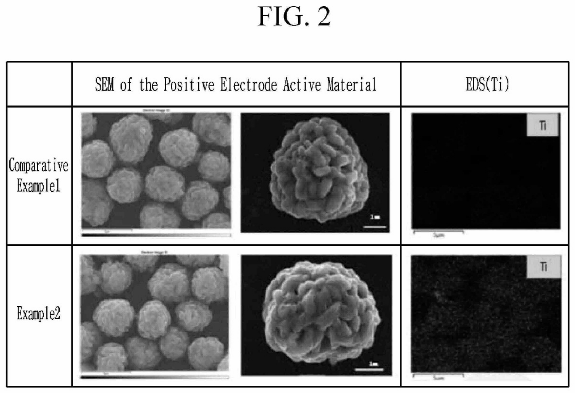

1) FIG. 2 shows the Ti element mapping images of the oxide-based solid electrolyte through SEM of the surface-modified positive electrode active material of Comparative Example 1 and Example 2 and EDS analysis of the surface of the active material surface, respectively.

As a result, it can be confirmed that, compared to the positive electrode active material that has not been surface-modified, the surface-modified positive electrode active materials according to Examples of the present disclosure uniformly disperse the oxide-based solid electrolyte nanoparticles and goes through heat treatment to form a uniform solid electrolyte coating layer on the surface of the positive electrode active material.

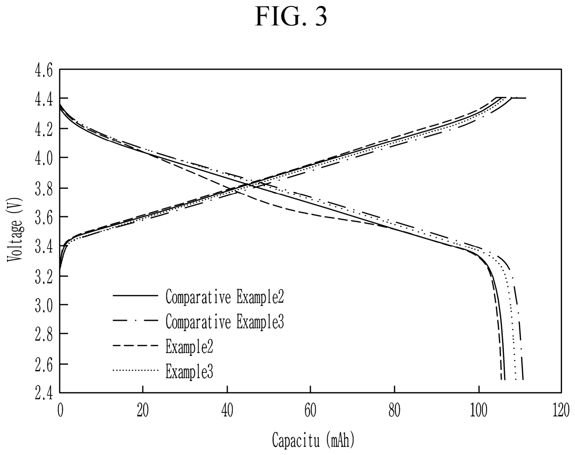

2) Also, the electrochemical characteristics of the lithium secondary batteries of Examples 2 and 3 and Comparative Examples 2 and 3 were evaluated. Specifically, for each sample, the capacity change and charge/discharge change were measured while repeatedly performing the charge/discharge test three times at room temperature (about 25°C) under the conditions: 1) 0.2C~ 0.33C charge (cut off: 4.2V, 0.05C) and 2) 0.2C~0.33C discharge (cut off: 2.5V), and the results are shown in FIG. 3.

As a result, it can be confirmed that in Examples 2 and 3 to which the surface-modified positive electrode active material was applied, the desolvation rate of the electrolyte was accelerated and the ion conductivity at low temperatures was increased, thereby improving the cell resistance and output characteristics.

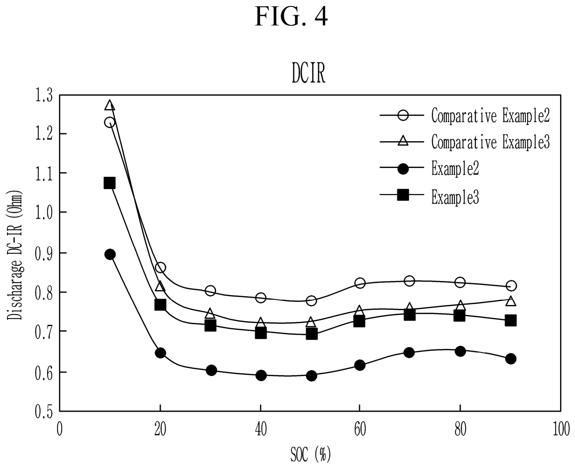

3) For the lithium secondary batteries of Examples 2 and 3 and Comparative Examples 2 and 3, the resistance for each state of charge(SOC) was measured while repeatedly performing the charge/discharge test at room temperature (about 25°C) under the conditions: 1) 0.2C~0.33C charge (cut-off: 4.2V, 0.05C) and 2) 0.2C~ 0.33C discharge (cut-off: 2.5V). Specifically, the charge/discharge tests were repeated under the SOC settings of 90%, 80%, 70%, 60%, 50%, 40%, 30%, 20%, and 10%, and after each charge/discharge, the direct current resistance (2.5C discharge (cut-off: 10s or 2V)) was measured, respectively. The resistance measurement results for each state of charge are shown in FIG. 4, and are shown together in Table 1 below:

**[Table 1]**

| Sample | Charge (mAh) | Discharge (mAh) | Efficiency (%) | DC-IR (Ω, @SOC 50%) | △DC-IR (%) |
|---|---|---|---|---|---|
| Comparative Example 2 | 106.5 | 105.4 | 99.0 | 0.78 | 0 |
| Comparative Example 3 | 110.8 | 110.4 | 99.6 | 0.73 | -7.0 |
| Example 2 | 106.3 | 105.7 | 99.4 | 0.59 | -24.3 |
| Example 3 | 110.0 | 109.7 | 99.7 | 0.70 | -10.9 |

As a result, it can be confirmed that in Example 2 to which the surface-modified cathode active material was applied, the desolvation rate of the electrolyte was accelerated and the ionic conductivity at low temperatures was increased, thereby improving the cell resistance and output characteristics.

## Claims

1. A method for manufacturing a surface-modified electrode active material, the method comprising:
preparing a solid electrolyte dispersion including an oxide-based solid electrolyte and a solvent;
coating the solid electrolyte dispersion onto a surface of an electrode active material; and
heat-treating the coated electrode active material to form the surface-modified electrode active material.

2. The method for manufacturing a surface-modified electrode active material according to claim 1, wherein:
the preparing the solid electrolyte dispersion includes mixing from 5 to 70 parts by weight of the oxide-based solid electrolyte and from 30 to 95 parts by weight of the solvent.

3. The method for manufacturing a surface-modified electrode active material according to claim 1, wherein:
in the preparing the solid electrolyte dispersion, the oxide-based solid electrolyte is dispersed in the solvent using a bead-milling method.

4. The method for manufacturing a surface-modified electrode active material according to claim 1, wherein:
the oxide-based solid electrolyte includes at least one lithium metal oxide or lithium metal phosphate selected from a Nasicon-type solid electrolyte, a Lisicon-type solid electrolyte, a Garnet-type solid electrolyte, a Perovskite-type solid electrolyte, or a LiPON-type solid electrolyte.

5. The method for manufacturing a surface-modified electrode active material according to claim 1, wherein:
the oxide-based solid electrolyte includes at least one of a LAGP(lithium aluminum germanium phosphate)-based compound, a LLZO(lithium lanthanum zirconium oxide)-based compound, a LATP(lithium aluminum titanium phosphate)-based compound, a LLZTO(lithium lanthanum zirconium tantalum oxide)-based compound, a LLTO(lithium lanthanum titanium oxide)-based compound, a LSTP(lithium silicon titanium phosphate)-based compound, or a LGPO(lithium germanium phosphate)-based compound.

6. The method for manufacturing a surface-modified electrode active material according to claim 1, wherein:
the oxide-based solid electrolyte has one or more particle size distributions of D50: 100 nm to 1 µm or D90: 400 nm to 1.5 µm.

7. The method for manufacturing a surface-modified electrode active material according to claim 6, wherein:
in the solid electrolyte dispersion, the oxide-based solid electrolyte has particle size distributions of D50: 300 nm to 700nm, D90: 400 nm to 900nm, and span: 1 or less.

8. The method for manufacturing a surface-modified electrode active material according to claim 1, wherein:
the coating the solid electrolyte dispersion is performed by a spray coating method.

9. The method for manufacturing a surface-modified electrode active material according to claim 1, wherein:
the oxide-based solid electrolyte is included in an amount of from 0.3 to 5 parts by weight based on 100 parts by weight of the electrode active material.

10. The method for manufacturing a surface-modified electrode active material according to claim 1, wherein:
the heat-treating includes heat-treating at a temperature equal to or higher than a glass transition temperature(Tg) of the oxide-based solid electrolyte.

11. The method for manufacturing a surface-modified electrode active material according to claim 1, wherein:
the heat-treating includes subjecting the coated electrode active material to a baking treatment at a temperature of from 600°C to 1000°C for from 1 hour to 3 hours to form the surface-modified electrode active material.

12. An electrode for a lithium secondary battery comprising:
a metal current collector; and
an active material layer that is formed on the metal current collector and includes a surface-modified electrode active material manufactured by the method of any one of claims 1 to 11.

13. A lithium secondary battery comprising:
a positive electrode; a negative electrode; and an electrolyte including a lithium salt and a non-aqueous organic solvent,
wherein the electrode for a lithium secondary battery according to claim 12 is included as a positive electrode.
